Europäisches Patentamt

European Patent Office

Office européen des brevets

(11) Veröffentlichungsnummer: **0 326 965**
**A2**

## (12) EUROPÄISCHE PATENTANMELDUNG

(21) Anmeldenummer: 89101467.2

(22) Anmeldetag: 27.01.89

(51) Int. Cl.⁴: **B60T 13/52 , B60T 13/24**

(30) Priorität: 01.02.88 DE 8801182 U
07.12.88 DE 8815245 U

(43) Veröffentlichungstag der Anmeldung:
09.08.89 Patentblatt 89/32

(84) Benannte Vertragsstaaten:
DE ES FR GB IT

(71) Anmelder: LUCAS INDUSTRIES public limited
company
Great King Street
Birmingham, B19 2XF West Midlands(GB)

(72) Erfinder: Schlüter, Peter
Faulbachstrasse 14a
D-5411 Kammerforst(DE)

(74) Vertreter: Goetz, Rupert et al
Patentanwälte Wuesthoff- v.
Pechmann-Behrens-Goetz Schweigerstrasse
2
D-8000 München 90(DE)

(54) Betätigungsvorrichtung für Fahrzeug-Bremsanlagen.

(57) Ein hydraulischer Hauptbremszylinder (10) und ein abseits davon angeordneter pneumatisch-hydraulischer Bremsdruckverstärker (11) bilden zusammen eine Betätigungsvorrichtung. Der Hauptbremszylinder (10) enthält mindestens eine hydraulische Druckkammer (41), die einen Anschluß (53) für einen Bremskreis aufweist und durch einen mechanisch betätigbaren Hauptbremskolben (43) begrenzt ist. Dem Hauptbremszylinder (10) ist eine hydraulische Hilfskammer (74) zugeordnet, die durch einen Hilfskolben (73) begrenzt ist. Der Bremsdruckverstärker (11) enthält zwei pneumatische Verstärkerkammern (17, 18), die durch eine bewegliche Wand (15) voneinander getrennt und durch ein Steuerventil (70) bei Bremsbetätigung an Quellen unterschiedlichen Druckes anschließbar sind. Ein Verstärkerkolben (28), der von der beweglichen Wand (15) im Bremsdruckverstärker (11) antreibbar ist, begrenzt eine hydraulische Servokammer (31). Diese ist an die Hilfskammer (74) angeschlossen, so daß der Druck in der Servokammer (31) über den Hilfskolben 73 bremskraftverstärkend auf den Hauptbremskolben (43) wirkt. Das Steuerventil (70) ist abseits vom Bremsdruckverstärker (11) am Hauptbremszylinder (10) angeordnet, gemeinsam mit dem Haupbremskolben (43) mechanisch betätigbar und mit den beiden pneumatischen Verstärkerkammern (17, 18) durch je eine Steuerleitung (21, 22) verbunden. Infolgedessen kann der Bremsdruckverstärker (11) an beliebiger Stelle in einem Fahrzeug untergebracht werden.

FIG. 3

## Betätigungsvorrichtung für Fahrzeug-Bremsanlagen

Die Erfindung betrifft eine Betätigungsvorrichtung für Fahrzeug-Bremsanlagen, die einen hydraulischen Hauptbremszylinder und einen abseits davon angeordneten pneumatisch-hydraulischen Bremsdruckverstärker aufweist, mit
- mindestens einer hydraulischen Druckkammer im Hauptbremszylinder, die einen Anschluß für einen Bremskreis aufweist und durch einen mechanisch betätigbaren Hauptbremskolben begrenzt ist,
- einer hydraulischen Hilfskammer, die dem Hauptbremszylinder zugeordnet und durch einen Hilfskolben begrenzt ist,
- zwei pneumatischen Verstärkerkammern im Bremsdruckverstärker, die durch eine bewegliche Wand voneinander getrennt und durch ein Steuerventil bei Bremsbetätigung an Quellen unterschiedlichen Druckes anschließbar sind, und
- einem Verstärkerkolben, der von der beweglichen Wand antreibbar ist und eine hydraulische Servokammer im Bremsdruckverstärker begrenzt, die an die Hilfskammer angeschlossen ist, so daß der Druck in der Druckkammer über den Hilfskolben bremskraftverstärkend auf den Hauptbremskolben wirkt.

Bei hydraulischen Fahrzeug-Bremsanlagen mit pneumatischer Bremsdruckverstärkung ist der Bremsdruckverstärker normalerweise an der Vorderseite der Spritzwand angeordnet und durch diese hindurch mittels einer Druckstange mit dem Bremspedal verbunden. Der Hauptbremszylinder ist vor dem Bremsdruckverstärker angeordnet und mit diesem zu einer Baugruppe vereinigt. Es gibt jedoch Fälle, in denen sich ein pneumatischer Bremsdruckverstärker üblicher Größe nicht zusammen mit dem Hauptbremszylinder unterbringen läßt. Eine solche gemeinsame Unterbringung kann beispielsweise daran scheitern, daß ein ursprünglich für Rechtslenkung gestaltetes Kraftfahrzeug mit Linkslenkung ausgerüstet wird. Es kann dann zweckmäßig sein, den pneumatischen Bremsdruckverstärker an seiner ursprünglichen Stelle im rechten Bereich des Motorraums zu lassen, während der Hauptbremszylinder zusammen mit der Lenkung und dem Bremspedal nach links versetzt wird. Für solche Fälle sind Betätigungsvorrichtungen der beschriebenen Gattung geschaffen worden.

Bei einer bekannten Betätigungsvorrichtung dieser Gattung EP 0036271 A1) ist der hydraulische Hauptbremszylinder ein Tandem-Zylinder mit einem primären und einem sekundären Hauptbremskolben, vor denen eine primäre bzw. sekundäre hydraulische Druckkammer angeordnet ist. Zwischen der primären Druckkammer und der Rückseite des sekundären Hauptbremskolbens ist eine Zwischenwand angeordnet, durch die sich ein stangenartiger rückwärtiger Fortsatz des sekundären Hauptbremskolbens hindurcherstreckt, um eine mechanische Kraftübertragung vom primären auf den sekundären Hauptbremskolben zu ermöglichen. Der abseits vom Hauptbremszylinder angeordnete pneumatisch-hydraulische Bremsdruckverstärker ist in seinem pneumatischen Teil einem üblichen pneumatischen Bremsdruckverstärker vergleichbar und zusätzlich mit einer hydraulischen Servokammer ausgestattet, die durch einen vom pneumatischen Teil betätigbaren Verstärkerkolben begrenzt ist.

Der Bremsdruckverstärker hat ein Steuerventil, das hydraulisch betätigbar und zu diesem Zweck durch eine Leitung mit der primären Druckkammer des Hauptbremszylinders verbunden ist. Die hydraulische Servokammer des Bremsdruckverstärkers ist durch eine weitere hydraulische Leitung mit der Hilfskammer des Hauptbremszylinders verbunden. Der primäre Hauptbremskolben ist unmittelbar vom Bremspedal aus mittels einer Schubstange betätigbar. Der bei Betätigung ansteigende hydraulische Druck in der primären Druckkammer wird auf einen primären Bremskreis und außerdem auf das Steuerventil des Bremsdruckverstärkers übertragen. Dieses Steuerventil bewirkt, daß eine pneumatisch erzeugte Kraft den Verstärkerkolben verschiebt, wodurch der Druck in der hydraulischen Servokammer des Bremsdruckverstärkers und infolgedessen auch der Druck in der Hilfskammer des Hauptbremszylinders ansteigt. Dadurch wird der sekundäre Hauptbremskolben vorgeschoben und infolgedessen auch ein sekundärer Bremskreis unter Druck gesetzt.

Diese bekannte Betätigungsvorrichtung erfordert, um betriebssicher zu sein, einen hohen Herstellungsaufwand. Schwierigkeiten macht bei Herstellung in großer Serie vor allem das (in der EP 0036271 A1 nur erwähnte, jedoch weder dargestellte noch näher beschriebene) Steuerventil, das einen Druckanstieg in der primären Druckkammer des Hauptbremszylinders genau reproduzierbar und möglichst ohne Zeitverlust in eine Druckdifferenz zwischen den beiden pneumatischen Verstärkerkammern umzusetzen hat, damit möglichst gleichzeitig und in gleichem Verhältnis mit dem Druck im primären Bremskreis auch der Druck im sekundären Bremskreis ansteigt. Ein Zeitverlust in dieser mehrfachen Druckumsetzung kann beispielsweise dazu führen, daß an die primäre Druckkammer angeschlossene Bremsen blockieren, ehe an die sekundäre Druckkammer angeschlossene Bremsen zu wirken beginnen. Eine Undichtheit zwischen der Hilfskammer und der primären Druckkammer des Hauptbremszylinders kann einen unerwünschten Rückkopplungseffekt hervorrufen, da infolge einer solchen Undichtheit ein zunächst gewünschter Druckanstieg in der Hilfskammer sich über die primäre Druckkammer auf das Steuerventil übertragen und infolgedessen einen weiteren Druckanstieg in der hydraulischen Servokammer des Bremsdruckverstärkers und somit auch in der Hilfskammer des Hauptbremszylinders zur Folge haben kann.

Der Erfindung liegt deshalb die Aufgabe zugrunde, eine Betätigungsvorrichtung für Fahrzeug-Bremsanlagen mit abseits vom Hauptbremszylinder angeordnetem Bremsdruckverstärker derart zu gestalten, daß er auch unter den Bedingungen einer Großserienfertigung und nach langem Gebrauch betriebssicher ist.

Die Aufgabe ist erfindungsgemäß mit einer Betätigungsvorrichtung der eingangs beschriebenen Gattung gelöst, bei der das Steuerventil abseits vom Bremsdruckverstärker am Hauptbremszylinder angeordnet ist, gemeinsam mit dem Hauptbremskolben mechanisch betätigbar ist und mit den beiden pneumatischen Verstärkerkammern durch je eine Steuerleitung verbunden ist.

Durch die mechanische Betätigung des Steuerventils ist ein Rückkopplungseffekt der oben beschriebenen Art ausgeschlossen. Die erfindungsgemäße Betätigungsvorrichtung hat den weiteren Vorteil, daß sie mit einem Steuerventil ausgestattet werden kann, das vollständig oder zumindest in wesentlichen Einzelheiten mit den üblicherweise an rein pneumatischen Bremskraftverstärkern vorgesehenen, vom Bremspedal aus betätigbaren Steuerventilen übereinstimmt.

Vorteilhafte Ausgestaltungen der Erfindung sind Gegenstand der Unteransprüche.

Ausführungsbeispiele der Erfindung werden im folgenden anhand schematischer Zeichnungen mit weiteren Einzelheiten erläutert. Es zeigen, jeweils in axialem Schnitt,

Fig. 1 einen hydraulischen Hauptbremszylinder und einen abseits davon angeordneten pneumatisch-hydraulischen Bremsdruckverstärker einer ersten erfindungsgemäßen Betätigungsvorrichtung,

Fig. 2 den Hauptbremszylinder aus Fig. 1 in größerem Maßstab,

Fig. 3 eine zweite erfindungsgemäße Betätigungsvorrichtung,

Fig. 4 den Hauptbremszylinder aus Fig. 3 in größerem Maßstab und

Fig. 5 einen weiter vergrößerten Ausschnitt aus Fig. 4.

Die beiden dargestellten Betätigungsvorrichtungen haben je einen Hauptbremszylinder 10 und einen Bremsdruckverstärker 11, die in der aus Fig.

1 bzw. 3 ersichtlichen Weise pneumatisch und hydraulisch aneinander angeschlossen, aber räumlich voneinander getrennt sind. Die in beiden Fällen abgebildete achsparallele Anordnung ist nicht zwingend. Es ist beispielsweise möglich, daß der Hauptbremszylinder 10 im Motorraum eines Kraftfahrzeugs etwa parallel zur Längsachse des Fahrzeugs angeordnet ist, während sich die Achse A des Bremsdruckverstärkers 11 in einem mehr oder weniger großen seitlichen Abstand vom Hauptbremszylinder 10 parallel zur Hochachse des Fahrzeugs erstreckt.

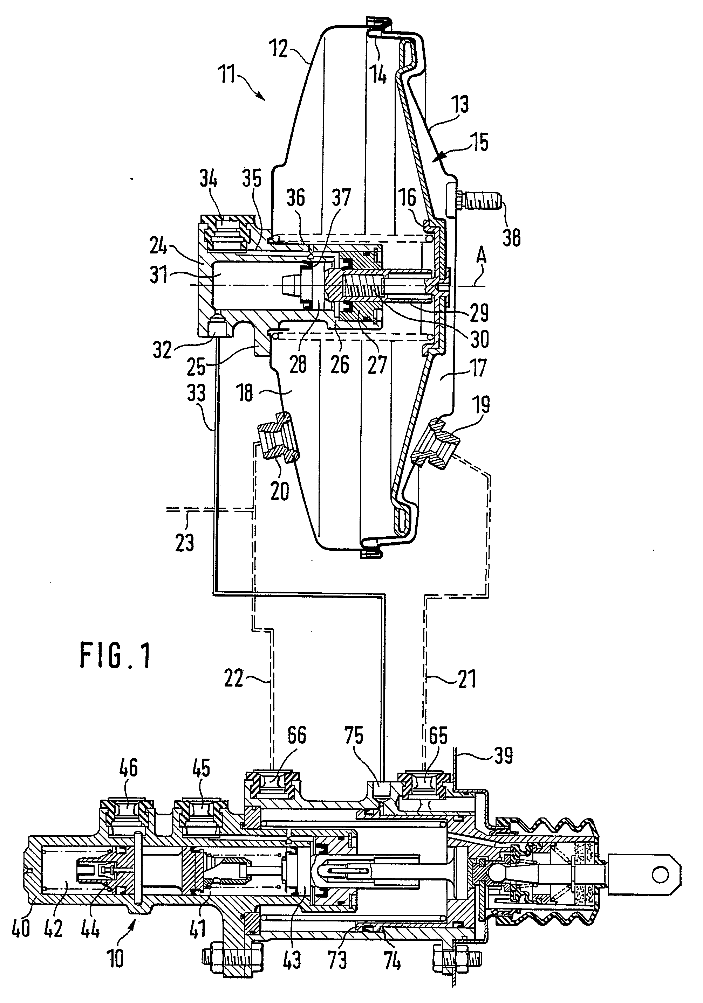

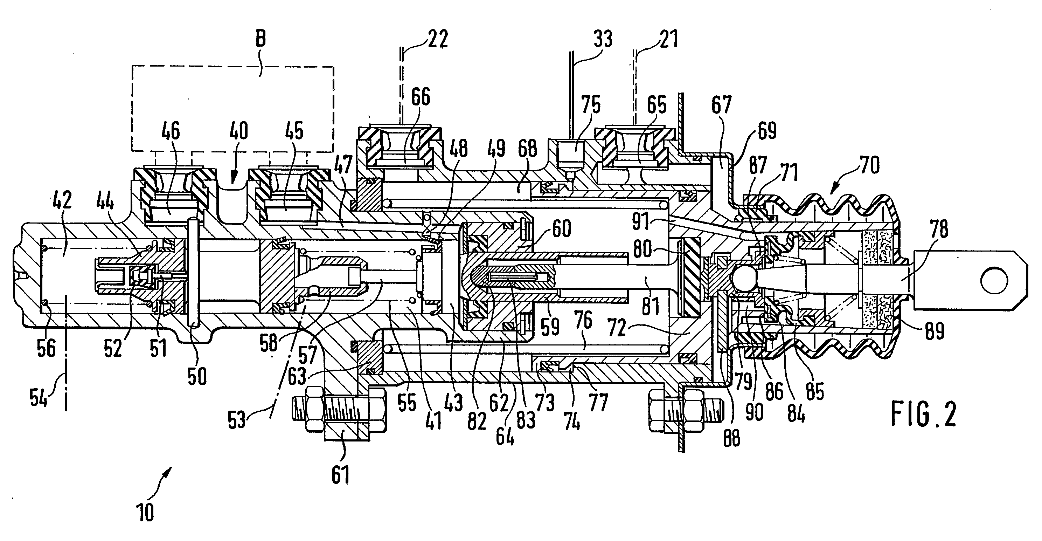

Anhand der Fig. 1 wird im folgenden der Bremsdruckverstärker 11 der ersten Betätigungsvorrichtung im einzelnen beschrieben; die sich daran anschließende Beschreibung des zugehörigen Hauptbremszylinders 10 stützt sich besonders auf dessen deutlichere Darstellung in Fig. 2.

Der Bremsdruckverstärker 11 hat ein zweiteiliges Gehäuse aus Blech mit einer vorderen Schale 12 und einer hinteren Schale 13, die an ihrem äußeren Rand miteinander fest verbunden sind und den äußeren Rand einer Membran 14 zwischen sich dicht eingespannt halten. Die Membran 14 gehört zu einer beweglichen Wand 15, die eine starre zentrale Stützplatte 16 aufweist und zwei pneumatische Verstärkerkammern 17 und 18 voneinander trennt. Diese werden im folgenden entsprechend der Darstellung in Fig. 1 als hintere Verstärkerkammer 17 bzw. vordere Verstärkerkammer 18 bezeichnet, ohne daß damit eine andere Anordnung ausgeschlossen werden soll. Entsprechendes gilt für Bauteile, die den Verstärkerkammern 17 und 18 zugeordnet sind.

Die beiden Verstärkerkammern 17 und 18 haben je einen Anschluß 19 bzw. 20 für je eine pneumatische Steuerleitung 21 bzw. 22, die beide, wie mit gestrichelten Linien angedeutet, zum Hauptbremszylinder 10 führen. Die vordere Verstärkerkammer 18 ist über ihre Steuerleitung 22 mit einer Abzweigleitung 23 verbunden, die zu einer Vakuumquelle führt, beispielsweise zur Ansaugleitung eines Verbrennungsmotors.

An der vorderen Schale 12 des Bremsdruckverstärkers 11 ist ein Verstärkerzylinder 24 mit einem an ihm ausgebildeten Flansch 25 befestigt. Der Verstärkerzylinder 24 hat ein hinteres Gehäuseteil 26, das sich axial durch die vordere Schale 12 bis in den Bereich der hinteren Schale 13 erstreckt und hinten durch einen Stopfen 27 abgeschlossen ist. Im Verstärkerzylinder 24 ist ein Verstärkerkolben 28 geführt, der eine durch den Stopfen 27 nach hinten herausragende Kolbenstange 29 aufweist. Diese ist teilweise hohl und mit einem Gewindebolzen 30 verschraubt, der an der Stützplatte 16 der beweglichen Wand 15 befestigt ist und sich axial nach vorne erstreckt.

Der Verstärkerzylinder 24 ist vorne abgeschlossen und begrenzt zusammen mit dem Verstärkerkolben 28 eine hydraulische Servokammer 31, die einen Anschluß 32 für eine mit vollen Linien angedeutete hydraulische Leitung 33 aufweist. Am Verstärkerzylinder 24 ist außerdem ein Anschluß 34 für einen nicht dargestellten Behälter für Bremsflüssigkeit ausgebildet. Solange der Verstärkerkolben 28, wie dargestellt, seine hintere Endstellung einnimmt, ist der Anschluß 34 über eine Längsbohrung 35 und eine radiale Schnüffelbohrung 36 mit der Servokammer 31 verbunden. Die Schnüffelbohrung 36 wird jedoch von einer Kolbendichtung 37 abgedeckt, wenn der Verstärkerkolben 28 sich vorwärtsbewegt.

An der hinteren Schale 13 sind in der üblichen Weise Gewindebolzen 38 befestigt, mit denen sich der Bremsdruckverstärker 11 am Kraftfahrzeug befestigen läßt, beispielsweise an einer Spritzwand 39, wie sie hinter dem Hauptbremszylinder 10 angedeutet ist.

Der Hauptbremszylinder 10 hat ein vorne geschlossenes Gehäuse 40 von bei Tandem-Hauptbremszylindern üblicher Form. Im Gehäuse 40 sind eine hinten angeordnete primäre Druckkammer 41 und eine davor angeordnete sekundäre Druckkammer 42 ausgebildet, die nach hinten von einem primären Hauptbremskolben 43 bzw. einem sekundären Hauptbremskoben 44 begrenzt sind, wobei die primäre Druckkammer 41 zwischen den beiden Hauptbremskolben 43 und 44 angeordnet ist. Jede der beiden Druckkammern 41 und 42 ist in der Ruhestellung des zugehörigen Hauptbremskolbens 43 bzw. 44 mit einem Anschluß 45 bzw. 46 für einen nur angedeuteten Bremsflüssigkeitsbehälter B verbunden.

Zu diesem Zweck geht vom Anschluß 45 eine Längsbohrung 47 aus, die hinter dem primären Hauptbremskolben 43 mündet und in dessen Ruhestellung durch eine radiale Schnüffelbohrung 48 mit der primären Druckkammer 41 verbunden ist. Bei Vorwärtsbewegung des primären Hauptbremskolbens 43 bewegt sich eine Kolbendichtung 49 an der Schnüffelbohrung 48 vorbei, wodurch die Verbindung der primären Druckkammer 41 mit dem Anschluß 45 unterbrochen wird.

Vom Anschluß 46 erstreckt sich ein geschlitzter hohler Federstift 50 diametral durch den sekundären Hauptbremskolben 44, der in Längsrichtung geschlitzt ist. In Ruhestellung des sekundären Hauptbremskolbens 44 liegt ein axialer Stößel 51 eines in diesen Kolben eingebauten zentralen Ventils 52 derart am hohlen Stift 50 an, daß das Ventil 52 offengehalten und dadurch eine Verbindung zwischen der sekundären Druckkammer 42 und dem zugehörigen Anschluß 46 aufrechterhalten wird. Diese Verbindung wird unterbrochen, sobald sich der sekundäre Hauptbremskolben 44 vorwärtsbewegt.

Die beiden Druckkammern 41 und 42 weisen je einen Anschluß 53 bzw. 54 für einen primären bzw. sekundären Bremskreis auf und enthalten je eine Rückstellfeder 55 bzw. 56 für den zugehörigen Hauptbremskolben 43 bzw. 44. Am primären Hauptbremskolben 43 ist ein Kopfbolzen 57 befestigt, der in einem am sekundären Hauptbremskolben 44 befestigten Käfig 58 derart gefangen ist, daß diese beiden Kolben sich nicht weiter als dargestellt voneinander entfernen können, während eine begrenzte gegenseitige Annäherung der beiden Kolben gegen den Widerstand der Rückstellfeder 55 möglich ist.

Vom primären Hauptbremskolben 43 erstreckt sich eine teilweise hohlgebohrte Kolbenstange 59 nach hinten durch einen Stopfen 60 hindurch, der das Gehäuse 40 nach hinten abschließt. Am Gehäuse 40 ist durch einen radialen äußeren Flansch 61 ein hinteres Gehäuseteil 62 abgegrenzt, das in Form und Abmessungen mit dem hinteren Gehäuseteil 26 des Verstärkerzylinders 24 in Fig. 1 übereinstimmt. An der Rückseite des Flansches 61 liegt abdichtend ein Adapterring 63 an; auf diesen ist von hinten her ein rohrförmiger Gehäusemantel 64 abdichtend aufgeschoben, der am Flansch 61 festgeschraubt ist.

Der Gehäusemantel 64 hat in seinem hinteren und in seinem vorderen Endbereich je einen Anschluß 65 bzw. 66 für die pneumatische Steuerleitung 21 bzw. 22. Diese beiden Anschlüsse 65 und 66 sind mit einem hinteren Ringraum 67 bzw. einem vorderen Ringraum 68 ständig verbunden. Der hintere Ringraum 67 ist durch eine Haube 69 begrenzt, die ein Steuerventil 70 umschließt und durch eine Gleitringdichtung 71 gegen ein Ventilgehäuse 72 dieses Steuerventils abgedichtet ist.

Das Ventilgehäuse 72 ist gemäß Fig. 2 mit einem ringförmigen Hilfskolben 73 einstückig ausgebildet und gemeinsam mit diesem im Gehäusemantel 64 axial verschiebbar. Der Hilfskolben 73 begrenzt zusammen mit dem Gehäusemantel 64 eine hydraulische Hilfskammer 74, die einen Anschluß 75 für die hydraulische Leitung 33 aufweist. Der Hilfskolben 73 ist durch eine im vorderen Ringraum 68 angeordnete Rückstellfeder 76 nach hinten, in Richtung zu einer Ringschulter 77 des Gehäusemantels 74 hin vorgespannt und ist nach vorne in einen Bereich des Ringraums 68 hineinbewegbar, der das hintere Gehäuseteil 62 des Hauptbremszylinders 10 umschließt.

Von hinten her erstreckt sich eine Schubstange 78 axial in das Ventilgehäuse 72 hinein. Die Schubstange 78 läßt sich an ihrem hinteren Ende gelenkig mit einem Bremspedal verbinden; ihr vorderes Ende ist gelenkig mit einem Betätigungsglied 79 verbunden, das zum Steuerventil 70 gehört und über einen mechanischen Kraftübersetzer 80 in Gestalt einer Gummiplatte an einem Stößel 81 abgestützt ist, der seinerseits über ein Zwischenstück 82 mit der Kolbenstange 59 gelenkig verbunden ist. Stößel 81 und Zwischenstück 82 sind durch eine axial angeordnete Federhülse 83 in bezug zueinander zentriert.

Zum Steuerventil 70 gehört ferner ein ringscheibenförmiger Ventilkörper 84, der axial beweglich ist und durch eine Schlauchmembran 85 abdichtend mit dem Ventilgehäuse 72 verbunden ist. Dem Ventilkörper 84 axial gegenüberliegend ist am Ventilgehäuse 72 ein radial äußerer Ventilsitz 86 und am Betätigungsglied 79 ein radial innerer Ventilsitz 87 ausgebildet. Die beiden Ventilsitze 86 und 87 sind konzentrisch zueinander angeordnet.

In Ruhestellung des Steuerventils 70 ist das Betätigungsglied 79 durch einen an ihm befestigten, radial wegragenden Anschlag 88, der an der Haube 69 anliegt, in einer Stellung gehalten, in welcher der radial innere Ventilsitz 87 geringfügig vor dem radial äußeren Ventilsitz 86 angeordnet ist. Infolgedessen liegt der Ventilkörper 84 in Ruhestellung des Steuerventils 70 am radial äußeren Ventilsitz 86 im wesentlichen dicht an, während zwischen dem Ventilkörper 84 und dem radial inneren Ventilsitz 87 eine geringe Undichtigkeit besteht. Diese Undichtigkeit ermöglicht es von hinten her durch ein Filter 89 in das Ventilgehäuse 72 einströmender Umgebungsluft, am radial inneren Ventilsitz 87 vorbei in einen Kanal 90 zu gelangen, der über den hinteren Ringraum 67 und die Steuerleitung 21 ständig mit der hinteren pneumatischen Verstärkerkammer 17 verbunden ist.

Infolgedessen wird in der hinteren Verstärkerkammer 17 schon in Ruhestellung des Steuerventils 70 ein geringer Überdruck gegenüber der vorderen pneumatischen Verstärkerkammer 18 aufrechterhalten. Dadurch wird der Verstärkerkolben 28 geringfügig belastet, so daß er in der hydraulischen Servokammer 31 einen leichten Überdruck erzeugt, der somit auch in der hydraulischen Hilfskammer 74 herrscht. Deshalb wird der Hilfskolben 73 schon in Ruhestellung des Steuerventils 70 gegen die Kraft der Rückstellfeder 76 in einem kleinen Abstand von der Ringschulter 77 gehalten, wie in den Zeichnungen dargestellt. Die Folge davon ist, daß das mit dem Hilfskolben 73 einstückig ausgebildete Ventilgehäuse 72 sich über den Stößel 81 und das Zwischenstück 82 spielfrei am primären Hauptbremskolben 43 abstützt, ohne diesen schon bei unbetätigtem Steuerventil 70 aus seiner dargestellten Ruhestellung herauszubewegen.

Wenn für eine Bremsbetätigung die Schubstange 78 mittels des Bremspedals nach vorne verschoben wird, drückt sie das Betätigungsglied 79 vollends vom Ventilkörper 84 weg, der durch den radial äußeren Ventilsitz 86 gehindert ist, dem Betätigungsglied 79 samt an diesem ausgebildeten radial inneren Ventilsitz 87 zu folgen. Infolgedessen strömt die Umgebungsluft nun ungehindert in die hintere pneumatische Verstärkerkammer 17, so daß der Verstärkerkolben 28 deutlich nach vorne verschoben wird und Entsprechendes mit dem Hilfskolben 73 geschieht. Die Folge davon ist, daß der primäre Hauptbremskolben 43 vorwärts verschoben wird und mit seiner Kolbendichtung 49 die Schnüffelbohrung 48 überfährt, so daß die primäre Druckkammer 41 abgeschlossen wird und der darin entstehende hydraulische Druck nun auch den sekundären Hauptbremskolben 44 vorwärtsschiebt.

Nach der Bremsbetätigung werden die genannten Kolben von den zugehörigen Rückstellfedern zurückgeschoben. Dabei wird das Betätigungsglied 79 vorübergehend soweit zurückbewegt, daß es mit dem an ihm ausgebildeten radial inneren Ventilsitz 87 den Ventilkörper 84 vom radial äußeren Ventilsitz 86 wegdrückt. Dadurch entsteht annähernd ein Druckausgleich von der hinteren pneumatischen Verstärkerkammer 17 über die Steuerleitung 21, den Kanal 90, am radial äußeren Ventilsitz 87 vorbei zu einem Kanal 91 und von dort weiter über den vorderen Ringraum 68 und die Steuerleitung 22 zur vorderen pneumatischen Verstärkerkammer 18.

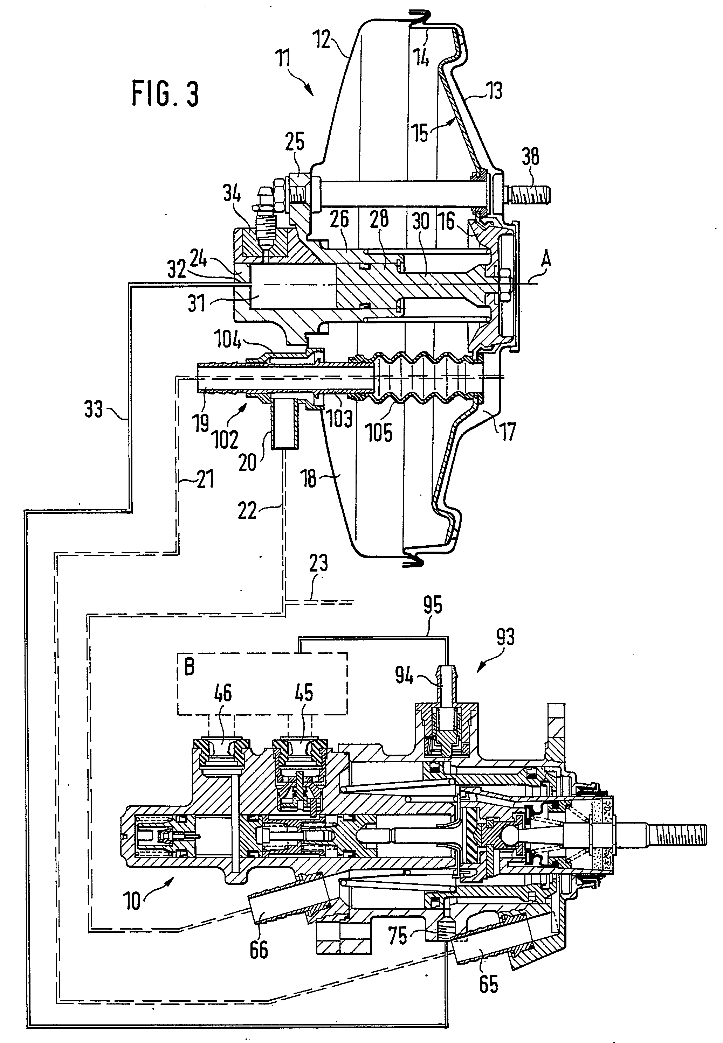

Die in Fig. 3 bis 5 dargestellte Betätigungsvorrichtung unterscheidet sich von der in Fig. 1 und 2 abgebildeten im wesentlichen durch folgende Einzelheiten:

Der ringförmige Hilfskolben 73 ist ein vom Ventilgehäuse 72 getrenntes Bauteil, so daß diese beiden Bauteile unabhängig voneinander bewegt werden können. Dem Ventilgehäuse 72 ist eine eigene Rückstellfeder 76' zugeordnet, die erheblich schwächer sein kann als die Rückstellfeder 76 in Fig. 1 und 2. Durch die Trennung des Hilfskolbens 73 vom Ventilgehäuse 72 wird bei Versagen des Bremsdruckverstärkers 11 verhindert, daß der Hilfskolben 73 beim Betätigen der Bremsen vorwärts geschoben wird und dabei Bremsflüssigkeit in die Hilfskammer 74 saugt, wobei Strömungswiderstände zu überwinden wären. Da bei Ausfall des Bremskraftverstärkers 11 nur das Ventilgehäuse 72 zum Betätigen der Bremsen vorgeschoben wird, muß dabei nur die verhältnismäßig schwache Rückstellfeder 76' überwunden werden. Der Hauptbremszylinder 10 läßt sich also bei Versagen des Bremsdruckverstärkers 11 ohne jede Behinderung durch den Hilfskolben 73 und dessen Rückstellfeder 76 ebenso betätigen, wie ein üblicher Hauptbremszylinder, dem kein Bremskraftverstärker zugeordnet ist.

Um die Baulänge des Hauptbremszylinders 10 zu verkürzen, ist gemäß Fig. 3 bis 5 der Anschluß 66 für die Steuerleitung 22 in einem nach vorne ragenden Fortsatz 92 des Flansches 61 ausgebildet, und der Adapterring 63 entfällt.

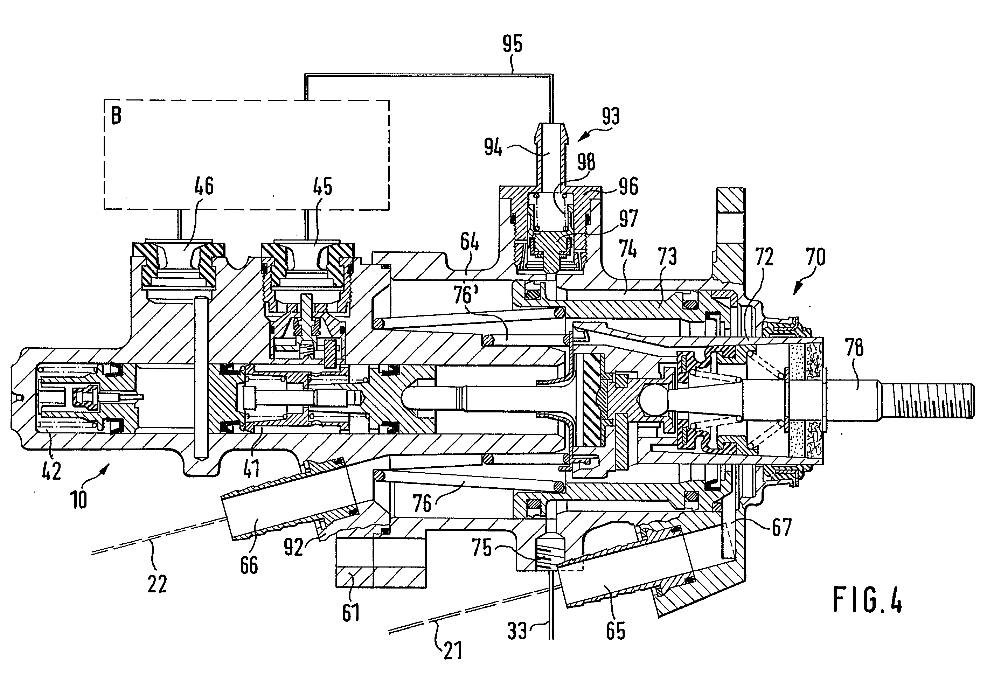

Der Bremsflüssigkeitsbehälter B am Hauptbremszylinder 10 wird dazu benützt, neben den Bremskreisen, die den Anschlüssen 45 und 46 zugeordnet sind, auch den hydraulischen Kreis, zu dem die Servokammer 31 und die Hilfskammer 74 gehören, ständig mit Bremsflüssigkeit gefüllt zu halten. Zu diesem Zweck ist am Gehäusemantel 64 ein Nachfüllventil 93 angeordnet, das einen Anschluß 94 für eine zum Bremsflüsskeitsbehälter B führende Leitung 95 aufweist. Das Nachfüllventil 93 hat ein Ventilgehäuse 96, das in den Gehäusemantel 64 eingeschraubt ist, und einen darin geführten Ventilkolben 97, der von einer Feder 98 so vorgespannt ist, daß er sich in Ruhestellung gemäß Fig. 3 und 4 am Gehäusemantel 64 abstützt. Der Ventilkolben 97 hat eine Lippendichtung 99, die in seiner Ruhestellung von einer Drosselbohrung 100 im Ventilgehäuse 96 umgangen wird, so daß der Bremsflüssigkeitsbehälter B mit der Hilfskammer 74 verbunden ist.

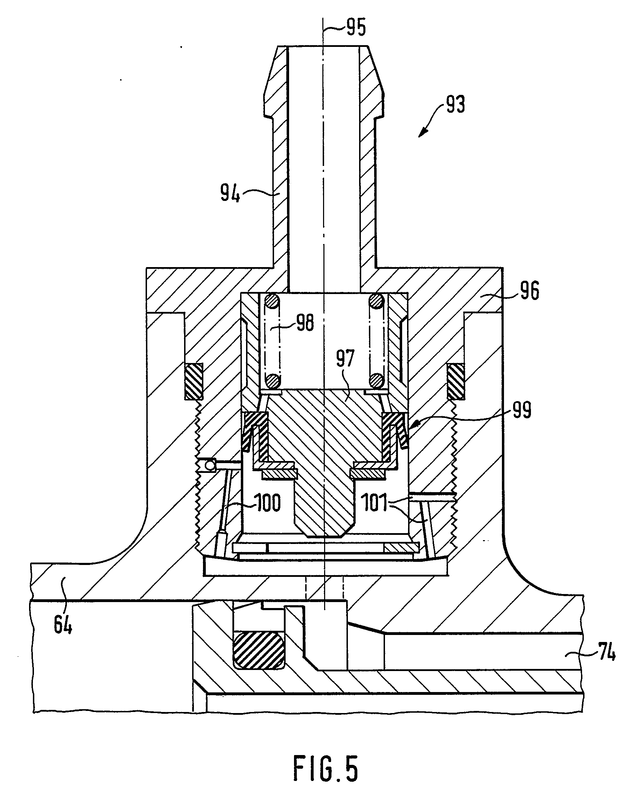

Solange in der Hilfskammer 74 nur der geringe Druck herrscht, der sich aus der oben im Zusammenhang mit Fig. 2 beschriebenen Ruhestellung des Steuerventils 70 ergibt, bleibt der Ventilkolben 97 in seiner Ruhestellung. Die Drosselbohrung 100 ist so eng, daß sie eine Drucksteigerung in der Hilfskammer 74 bei einer Bremsbetätigung nicht verhindern kann. Sobald zu Beginn einer Bremsbetätigung der Druck in der Hilfskammer 74 über einen bestimmten Betrag, beispielsweise über 0,07 bar steigt, verschiebt sich der Ventilkolben 97 gemäß Fig. 5 gegen den Widerstand der Feder 98 so weit vom Gehäusemantel 64 weg, daß die Lippendichtung 99 die Drosselbohrung 100 überfährt. Somit ist die Bremsflüssigkeit gehindert, aus der Hilfskammer 74 in den Bremsflüssigkeitsbehälter B abzufließen.

Das Ventilgehäuse 96 weist einen weiteren Umgehungskanal 101 auf, der einen erheblich größeren Querschnitt als die Drosselbohrung 100 hat, aber in der abgebildeten normalen Einbaulage des Ventilgehäuses 96 unwirksam ist. Schraubt man jedoch das Ventilgehäuse 96 etwas heraus, dann wandert mit ihm der Umgehungskanal 101 vom Gehäusemantel 64 weg, während der Ventilkolben 97 von der Feder 98 in seiner in Fig. 3 und 4 abgebildeten Ruhestellung gehalten wird. Dadurch ergibt sich eine Relativstellung, in der die Lippendichtung 99 vom Umgebungskanal 101 umgangen wird, der Ventilkolben 97 also unwirksam ist.

So ist es möglich, die gesamte Bremsanlage einschließlich des hydraulischen Kreises, zu dem die Servokammer 31 und die Hilfskammer 74 gehören, in kurzer Zeit zu evakuieren und mit Bremsflüssigkeit zu füllen. Diesem Zweck dient der gemäß Fig. 3 am Verstärkerzylinder 24 ausgebildete Anschluß 34. Ein Bremsflüssigkeitsbehälter ist dem Anschluß 34 bei der in Fig. 3 bis 5 dargestellten Ausführungsform nicht zugeordnet, da der am Hauptbremszylinder 10 angeordnete, z.B. in üblicher Weise auf ihn aufgesteckte, Bremsflüssigkeitsbehälter B genügt.

Die in Fig. 3 bis 5 dargestellte Ausführungsform hat ferner die Besonderheit, daß die Steuerleitungen 21 und 22 beide an derselben, in Fig. 3 vorderen Seite des Bremsdruckverstärkers 11 angeschlossen sind. Hierzu ist eine Armatur 102 vorgesehen, die ein inneres Rohrstück 103 und ein dazu koaxiales äußeres Rohrstück 104 aufweist. Das innere Rohrstück 103 ist an die Steuerleitung 21 angeschlossen und erstreckt sich entweder selber durch die bewegliche Wand 15 hindurch in die Verstärkerkammer 17 oder ist mit dieser, wie in Fig. 3 dargestellt, durch einen Faltenbalg 105 verbunden. Das äußere Rohrstück 104 ist an die Steuerleitung 22 angeschlossen und mündet in die Verstärkerkammer 18.

Bei der in Fig. 3 bis 5 dargestellten Ausführungsform ist besonders vorteilhaft, daß der Bremsdruckverstärker 11 in einem schmalen Einbauraum untergebracht werden kann, beispielsweise in einem Radkasten oder unter dem Boden eines Kraftfahrzeugs.

## Ansprüche

1. Betätigungsvorrichtung für Fahrzeug-Bremsanlagen, die einen hydraulischen Hauptbremszylinder (10) und einen abseits davon angeordneten pneumatisch-hydraulischen Bremsdruckverstärker (11) aufweist, mit
- mindestens einer hydraulischen Druckkammer (41) im Hauptbremszylinder (10), die einen Anschluß (53) für einen Bremskreis aufweist und durch einen mechanisch betätigbaren Hauptbremskolben (43) begrenzt ist,
- einer hydraulischen Hilfskammer (74), die dem Hauptbremszylinder (10) zugeordnet und durch einen Hilfskolben (73) begrenzt ist,
- zwei pneumatischen Verstärkerkammern (17, 18) im Bremsdruckverstärker (11), die durch eine bewegliche Wand (15) voneinander getrennt und durch ein Steuerventil (70) bei Bremsbetätigung an Quellen unterschiedlichen Druckes anschließbar sind, und
- einem Verstärkerkolben (28), der von der beweglichen Wand (15) antreibbar ist und eine hydraulische Servokammer (31) im Bremsdruckverstärker (11) begrenzt, die an die Hilfskammer (74) angeschlossen ist, so daß der Druck in der Servokammer (31) über den Hilfskolben (73) bremskraftverstärkend auf den Hauptbremskolben (43) wirkt, dadurch **gekennzeichnet,** daß das Steuerventil (70) abseits vom Bremsdruckverstärker (11) am Hauptbremszylinder (10) angeordnet ist, gemeinsam mit dem Hauptbremskolben (43) mechanisch betätigbar ist und mit den beiden pneumatischen Verstärkerkammern (17, 18) durch je eine Steuerleitung (21, 22) verbunden ist.

2. Betätigungsvorrichtung nach Anspruch 1, dadurch **gekennzeichnet**, daß das Steuerventil (70) ein Ventilgehäuse (72) hat, das mit dem Hilfskolben (73) zu gemeinsamer Bewegung verbunden ist.

3. Betätigungsvorrichtung nach Anspruch 1 oder 2, dadurch **gekennzeichnet**, daß der Hilfskolben (73) als Ringkolben gestaltet und in einem vor dem Ventilgehäuse (72) angeordneten, vorderen Ringraum (68) bewegbar ist, der radial nach innen durch ein Gehäuseteil (62) des Hauptbremszylinders (10) begrenzt ist, in dem der Hauptbremskolben (43) geführt ist.

4. Betätigungsvorrichtung nach den Ansprüchen 2 und 3, dadurch **gekennzeichnet**, daß der vordere Ringraum (68) an eine der pneumatischen Verstärkerkammern (18) angeschlossen ist und radial nach außen durch einen Gehäusemantel (64) des Hauptbremszylinders (10) begrenzt ist, der zusammen mit dem Hilfskolben (73) und Ventilgehäuse (72) auch die hydraulische Hilfskammer (74) begrenzt.

5. Betätigungsvorrichtung nach Anspruch 4, dadurch **gekennzeichnet**, daß dem Gehäusemantel (64) Anschlüsse (65, 66) für die beiden Steuerleitungen (21, 22) zugeordnet sind, von denen einer (66) über den vorderen Ringraum (68) und der andere (65) über einen rings um das Ventilgehäuse (72) angeordneten hinteren Ringraum (67) mit dem Steuerventil (70) verbunden ist.

6. Betätigungsvorrichtung nach Anspruch 4, dadurch **gekennzeichnet**, daß der mit dem vorderen Ringraum (68) verbundene Anschluß (66) an einem Adapterring (63) ausgebildet ist, der den Gehäusemantel (64) mit dem Gehäuse (40) des Hauptbremszylinders (10) abdichtend verbindet.

7. Betätigungsvorrichtung nach einem der Ansprüche 1 bis 6 dadurch **gekennzeichnet**, daß in einem Tandem-Hauptbremszylinder (10), der zusätzlich zu dem genannten Hauptbremskolben (43) einen sekundären Hauptbremskolben (44) aufweist, der Hilfskolben (73) getrennt von beiden Hauptbremskolben (43, 44) angeordnet, in bezug auf jeden von ihnen begrenzt beweglich und von einer eigenen Rückstellfeder (76) belastet ist.

8. Betätigungsvorrichtung nach einem der Ansprüche 1 bis 7, dadurch **gekennzeichnet**, daß das Steuerventil (70) ein Betätigungsglied (79) aufweist, dessen Ruhestellung durch einen Anschlag (88) so festgelegt ist, daß das Steuerventil (70) ständig einen kleinen Druckunterschied zwischen den beiden pneumatischen Verstärkerkammern (17, 18) und dadurch ständig einen kleinen Überdruck in der Hilfskammer (74) aufrechterhält.

9. Betätigungsvorrichtung nach einem der Ansprüche 1 bis 8, dadurch **gekennzeichnet**, daß der bzw. jeder hydraulischen Druckkammer (41, 42) im Hauptbremszylinder (10) ein Anschluß (45, 46) für einen Bremsflüssigkeitsbehälter (B) zugeordnet ist und daß der hydraulischen Servokammer (31) des Bremskraftverstärkers (11) ebenfalls ein eigener Anschluß (34) zum Entlüften und/oder Nachfüllen zugeordnet ist.

10. Betätigungsvorrichtung nach den Ansprüchen 8 und 9, dadurch **gekennzeichnet**, daß der Bremsflüssigkeitsbehälter (B) mit der Hilfskammer (74) durch ein Nachfüllventil (93) verbunden ist, das erst schließt, wenn der genannte kleine Überdruck in der Hilfskammer (74) überschritten wird.

11. Betätigungsvorrichtung nach einem der Ansprüche 1 bis 10, dadurch **gekennzeichnet**, daß die beiden Steuerleitungen (21, 22) an den Bremsdruckverstärker (11) durch eine gemeinsame Armatur (102) angeschlossen sind, die zwei gleichachsige Rohrstücke (103, 104) aufweist, von denen eines (103) durch die bewegliche Wand (15) hindurch in eine Verstärkerkammer (17), und das andere Rohrstück (104) unmittelbar in die andere Verstärkerkammer (18) mündet.

FIG.1

EP 0 326 965 A2          ?7.01.1989

FIG. 2

EP 0 326 965 A2

FIG. 3

FIG.4

FIG.5